# EUROPEAN PATENT APPLICATION

(11) **EP 0 732 849 A2**
(43) Date of publication of application: **18.09.1996**
(21) Application number: 96107378.0
(22) Date of filing: 27.11.1992
(51) Int. Cl.: H04N 5/92, H04N 5/94, H04N 7/32

(54) **Motion picture data decoding system**

(30) Priority: 30.11.1991 JP 342435/91; 30.11.1991 JP 342413/91
(62) Divisional of application: 92120329.5
(71) Applicant: SONY CORPORATION, Tokyo (JP)
(72) Inventor: Iwamura, Ryuichi, c/o Sony Corporation, Tokyo (JP)
(74) Representative: Melzer, Wolfgang, Dipl.-Ing.

(57) **Abstract**

In a motion picture data decoding system, even if a transmission error including an uncorrectable code error is generated, a lacked portion of the picture can be corrected to be smooth with respect to a peripheral picture.

A block including an uncorrectable code error is generated is replaced with a block picture, which is produced by a past motion vector depending on a past frame picture. Thereby, the lack portion due to the code error can be corrected to be smooth with respect to the peripheral picture, regardless of the existence of the motion of the picture to be decoded.

When an uncorrectable code error is detected (S23), it is determined whether or not a motion quantity of a motion vector corresponding to picture data, which causes an error detection signal, is larger than a predetermined value. If the motion quantity is large, the picture data and the interpolation data are combined together. If the motion quantity is small, the picture data and the predictive picture data are combined together. Thereby, the lack due to the code error can be corrected to be unnoticeable, regardless of the motion quantity of the motion picture data to decoded.

## Description

### BACKGROUND OF THE INVENTION

### FIELD OF THE INVENTION

This invention relates to a motion picture data decoding system which is capable of reproducing motion picture data from record media such as so-called compact disc, cassette tape, and optical disc etc..

### DESCRIPTION OF THE PRIOR ART

Conventionally, since digital recording of the motion picture uses an extremely large amount of information, the recording/reproducing of the motion picture requires a record medium of which continuous transmission speed is extremely high.

For example, the digital recording/reproducing of the video signals in an NTSC system utilizes so-called video disc having a large information recording capacity.

However, in order to achieve a long time recording of the motion picture data containing the information, of which quantity is similar to that recorded in the so-called video disc, in a smaller record medium having a smaller information recording capacity, it is essential to record the video signal in a high-efficiency encoded form, and it is also essential to provide means for efficiently decoding the read signals.

In order to comply with these demand, there has been proposed a high-efficiency coding systems for picture signals, one of which is known as an MPEG (Moving Picture Experts Group) system.

In this MPEG system, a difference between pictures is taken in order to reduce redundancy in a time axis direction, and then discrete cosine transform (DCT) is executed in order to reduce the redundancy in the spatial axis direction.

However, in the MPEG system, a decoder is disposed at an upstream position in a decoding stage. Therefore, if there is generated an error, which cannot be corrected by the error code correcting ability of the decoder, the picture lacks a portion corresponding to the error, resulting in a low quantity of the picture if displayed without a further processing.

Accordingly, the error is corrected by fitting a past frame picture, which is used as a partial picture located in the same position as the lacked picture portion, into the lacked portion.

This method is effective for motionless picture portions. However, the lacked portion and peripheral portion cannot be connected smoothly if the picture moves, so that the lack is noticeable. Therefore, a sufficient result cannot be necessarily obtained.

### SUMMARY OF THE INVENTION

In view of the foregoing, an object of this invention is to provide a motion picture data decoding system which can achieve the reproduction of the picture with a higher fidelity, even when a code error due to a transmission error cannot be corrected at a decoder side.

Another object of the invention is to provide a motion picture decoding system which can decode the picture to render the lack of the picture unnoticeable regardless of the motion quantity of the lacked picture.

The foregoing objects and other objects of the invention have been achieved by the provision of a motion picture data decoder for decoding motion picture data which is sequentially supplied, comprising: error detecting/correcting means for correcting a code error of the motion picture data to supply reproduction digital signal, and for supplying an error detection signal when an uncorrectable code error is detected in the motion picture data; demultiplexing means for separating motion vector data and picture data from the reproduction digital signal; predictive picture producing means for producing predictive picture data based on the error detection signal and the motion vector data; and picture combining means for combining the picture data and the predictive picture data together; and the predictive picture producing means being adapted to produce the predictive picture data based on the motion vector corresponding to the motion picture data when an uncorrectable code error is detected in the motion picture data.

Also, the present invention provides a motion picture data decoder for decoding motion picture data which is sequentially supplied, comprising: error detecting/correcting means for correcting a code error of the motion picture data to supply reproduction digital signal, and for supplying an error detection signal when an uncorrectable code error is detected in the motion picture data; demultiplexing means for separating motion vector data and picture data from the reproduction digital signal; predictive picture producing means, to which the error detection signal and the motion vector data are supplied, for predictive picture producing data based on the motion vector data when the error detecting/correcting means can correct the code error, and for producing the predictive picture producing data based on the motion vector which is determined correspondingly to the motion picture data including the detected code error when the error detecting/correcting means cannot correct the code error; interpolated picture producing means for producing interpolated picture data corresponding to the motion picture data including the uncorrectable code error, based on the error detection signal and the picture data; and picture combining means for combining the picture data with the predictive picture data when the error detecting and correcting means can correct the code error, and for combining the picture data with either the predictive picture data or the interpolated picture data, based on a motion quantity of the motion vector depending on the motion picture data including the detected code error, when the uncorrectable code error is detected.

In an operation for decoding the motion picture data, when the uncorrectable code error is detected, the lacked portion in the picture is replaced with the predictive picture data which is produced based on the motion vector corresponding to the motion picture data. Thereby, the lack due to the code error can be corrected to be unnoticeable, even if the motion quantity of the motion picture data to be decoded is large.

Further, the picture data is combined with the interpolated picture data or the predictive picture data for output, based on the quantity of motion of the vector corresponding to the motion picture data causing the error detection signal. Thereby, the lack due to the code error can be corrected to be unnoticeable, regardless of the motion quantity of the motion picture data to be decoded.

According to the invention, the motion picture data, in which the uncorrectable code error is generated, is replaced with the predictive picture data, which is produced by the corresponding motion vector, for decoding. Thereby, regardless of the existence of the motion of the decoded picture, the lacked portion of the picture caused by the code error can be corrected smoothly with respect to the peripheral picture.

According to the invention, when the uncorrectable code error is detected, the picture data and the predictive picture data are combined or the picture data and the interpolated picture data are combined and are decoded in accordance with the motion quantity of the motion vector corresponding to the motion picture data in which the code error is detected. Thereby, regardless of the motion quantity of the decoded picture, the lacked portion of the picture caused by the code error can be corrected smoothly with respect to the peripheral picture.

The nature, principle and utility of the invention will become more apparent from the following detailed description when read in conjunction with the accompanying drawings in which like parts are designated by like reference numerals or characters.

### BRIEF DESCRIPTION OF THE DRAWINGS

In the accompanying drawings:
Fig. 1 is a block diagram showing a construction of an embodiment of a motion picture data encoder of the invention;
Fig. 2 is a schematic diagram showing inter-frame motion prediction;
Fig. 3 is a block diagram showing a construction of an embodiment of a motion picture data decoder of the invention;
Fig. 4 is a schematic diagram showing inter frame-motion prediction in a case of detection of a block including an uncorrectable error in an intra-frame I₁;

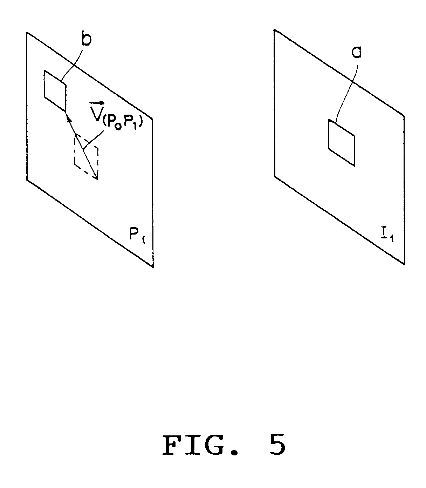

Fig. 5 is a schematic diagram showing motion compensation by a motion vector;
Fig. 6 is a schematic diagram showing inter-frame motion prediction in a case of detection of a block including an uncorrectable error in an intra-frame I₁;
Fig. 7 is a schematic diagram showing block interpolation;
Fig. 8 is a schematic diagram showing intra-frame interpolating processing; and
Fig. 9 is a schematic diagram showing other embodiment.

### DETAILED DESCRIPTION OF THE INVENTION

Preferred embodiments of this invention will be described with reference to the accompanying drawings:

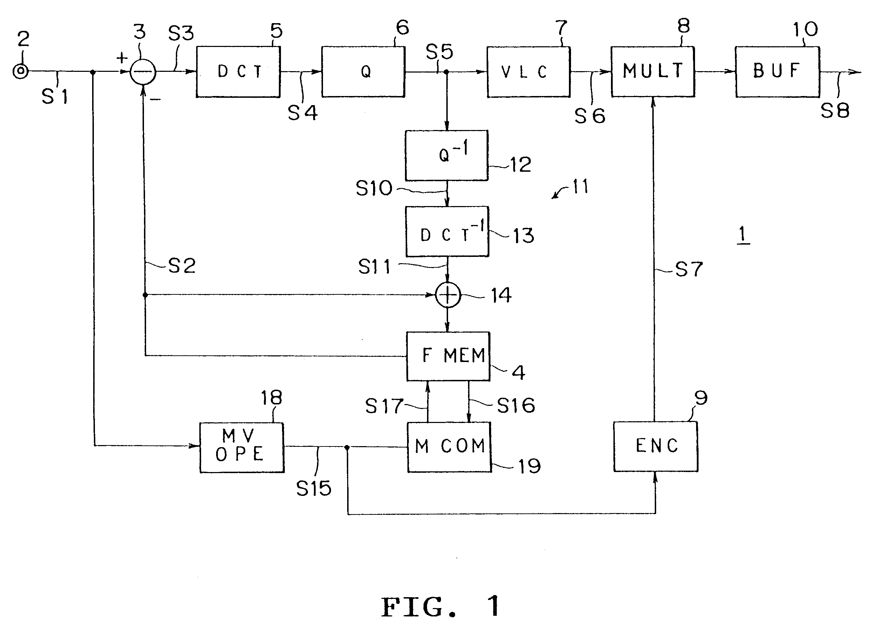

In Fig. 1, 1 generally indicates a motion picture data encoder, which receives input picture data S1 through an input terminal 2. The input picture data S1 is formed by transforming analog motion picture signals which is read out from recording medium which is optical disc etc. into digital data.

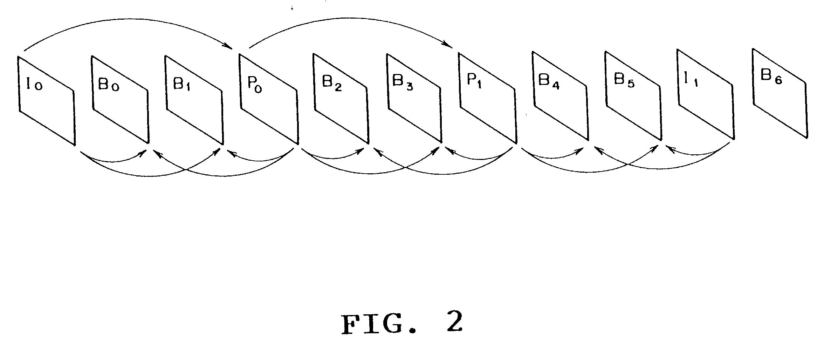

The input picture data S1 is formed of intra-frames I, predict frames P and bidirectional frames B, as shown in Fig. 2.

The intra-frames I (I₀, I₁, ...) are frames subjected to data compression only in the frames for transmission. The predict frames P (P₀, P₁, ...) are frames subjected to motion prediction in one direction, and the bidirectional frames B (B₀, B₁, ...) are frames subjected to the motion prediction in the both directions.

A differential data producing circuit 3 receives the input picture data S1 through the input terminal 2 and also receives from a frame memory 4 a previous frame picture data S2 of the previous frame stored in the frame memory 4.

The differential data generating circuit 3 obtains the difference between the input picture data S1 and the previous frame picture data S2 to generate and supply differential data S3 to a discrete coding transform circuit 5.

The discrete coding transform circuit 5 utilizes two-dimensional correlation of the picture to execute the discrete cosine transform of the differential data S3 in units of minute blocks, and the transformed data S4 thus obtained is supplied to a quantizer 6.

The quantizer 6 quantizes the transformed data S4 in a predetermined quantization step size, and the quantization data S5 thus obtained at an output is supplied to a variable length code circuit 7.

The variable length code circuit 7 carries out the variable length code of the quantized data S5 to supply variable length code data S6 to a multiplexer 8.

The multiplexer 8 multiplexes motion vector data S7 supplied from an encoder 9 with the variable length code data S6, and supplies the same, i.e., transmission data S8, through a buffer circuit 10.

The motion picture data encoder 1 has a local decoding circuit system 11, which carries out local decoding of the quantized data S5 to be transmitted as the transmission data S8, and supplies the same to the frame memory 4.

In the local decoding circuit system 11, an inverse quantizer 12 carries out inverse quantization of the quantized data S5 supplied thereto into a representative value and thereby transforms the same into inversely quantized data S10, i.e., the decoded data corresponding to the transformed data before the quantization. This data is supplied to a discrete cosine inverse transform circuit 13.

The discrete cosine inverse transform circuit 13 transforms the inversely quantized data S10, which has decoded by the inverse quantizer 12, into decoded picture data S11, utilizing the transform processing opposite to that by the discrete cosine transform circuit 5. The decoded picture data S11 is supplied to a frame data producing circuit 14.

The frame data producing circuit 14 carries out the addition of the frame picture data S2, which is fed back from the frame memory 4, and the decoded picture data S11 to restore the picture data, which was supplied as the transmission data S8, and sequentially supplies the same in the frame memory 4.

The motion picture data encoder 1 obtains the motion vector by supplying the input picture data S1 to a motion vector operation circuit 18, and supplies it as motion data S15 to a motion compensation circuit 19 and the encoder 9.

The motion compensation circuit 19 reads decoded picture data S16 from the frame memory 4, and supplies a motion prediction data S17, which executes motion compensation of decoded picture data S16, to the frame memory 4.

The encoder 9 encodes the motion data S15, which is obtained by the motion vector operation circuit 18, to form the motion vector data S7 supplied to the multiplexer 8.

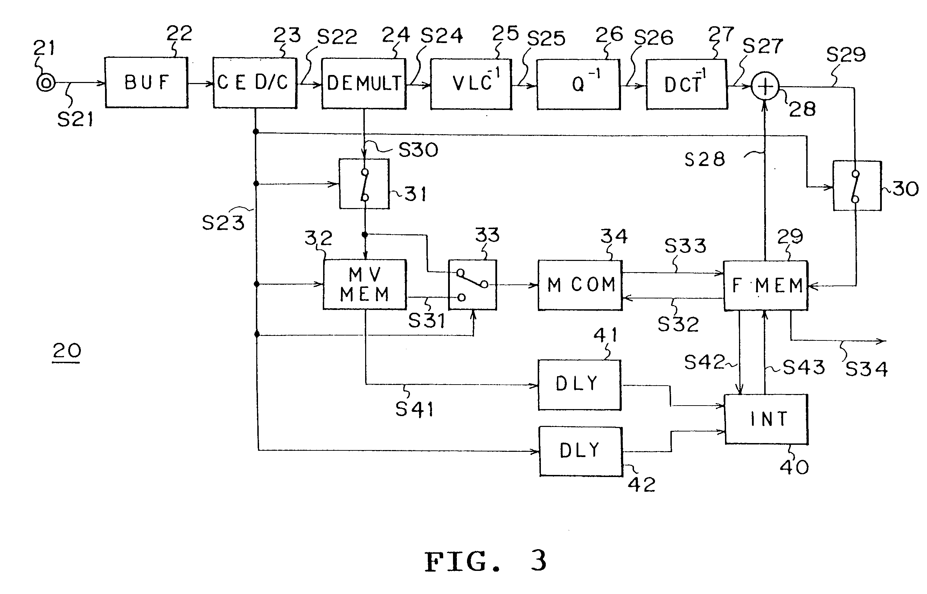

On the other hand, in Fig. 3, 20 generally indicates a motion picture data decoder, which receives reproduction data S21 read from the record medium through an input terminal 21 and a buffer circuit 22 and supplies it to a code error detecting/correcting circuit 23.

The code error detecting/correcting circuit 23 detects and corrects the error contained in the picture data of the reproduction data S21, and supplies the corrected reproduction picture data S22 to a demultiplexer circuit 24.

The code error detecting/correcting circuit 23 supplies a switching signal S23 for controlling switching of the picture data to be output, when it detects a block including an uncorrectable error code.

A demultiplexer circuit 24 separates the motion vector data from the reproduction picture data S22 to supply it as a differential picture information data S24 to a variable length decoder circuit 25, and produces decoded picture data S25, which corresponds to that before the coding by the variable length code encoding circuit 7 (Fig. 1), to supply the same to an inverse quantizer 26.

The inverse quantizer 26 inversely quantizes the decoded picture data S25 into a representative value and transforms it into inversely quantized data S26, which is subjected to the transform by a discrete cosine inverse transform circuit 27, utilizing the transform processing opposite to that by the discrete cosine transform circuit 5 (Fig. 1). In this manner, decoded picture data S27 is formed and is supplied to a frame data producing circuit 28.

The frame data producing circuit 28 adds the decoded data S27 to motion compensation data S28, which is read from a frame memory 29, to produce decoded picture data S29, which is supplied from the frame memory 29 through a switching circuit 30.

The switching circuit 30 is controlled to be turned on/off by the switching signal S23 supplied from the code error detecting/correcting circuit 23. When the code error detecting/correcting circuit 23 detects the uncorrectable code error in the reproduction data S21, the switching circuit 30 operates to interrupt the storage of the decoded picture data S29 in the frame memory 29.

The demultiplexer circuit 24 separates the vector data from the reproduction picture data S22, and supplies it as the motion vector data S30 through a switching circuit 31 to a motion vector memory 32.

The switching circuit 31 operates to supply the current motion vector data S30 to a motion vector memory 32, which holds the motion vectors for the past three frames, when the code error detecting/correcting circuit 23 does not detect the uncorrectable code error.

A switching circuit 33 is controlled to be switched by the switching signal S23 supplied from the code error detecting/correcting circuit 23. The switching circuit 33 supplies the current motion vector S30 to a motion compensation circuit 34, when the uncorrectable code error is not detected in the reproduction data S21 of the current frame. The switching circuit 33 also supplies the previous motion vector data S31 held in the motion vector memory 32 to the motion compensation circuit 34, when the uncorrectable code error is detected.

When the motion compensation circuit 34 receives a reference frame data S32 from the frame memory 29, the motion compensation circuit 34 produces a predictive block picture based on the current or previous vector S30 or S31, and stores it as the predictive picture data S33 in the frame memory 29.

When the uncorrectable code error is generated, the frame memory 29 temporary uses the predictive picture data S33 generated by the previous motion vector S31 and stores it as the picture data of the corresponding block portion. The frame memory also supplies it as an output picture data S34.

The frame memory 29 replaces interpolated picture data S43, which is newly supplied from an interpolating circuit 40, by the predictive picture data S33 and stores the same, when the motion quantity of the previous motion vector S31 is larger than a predetermined value, and supplies it as the output picture data S34.

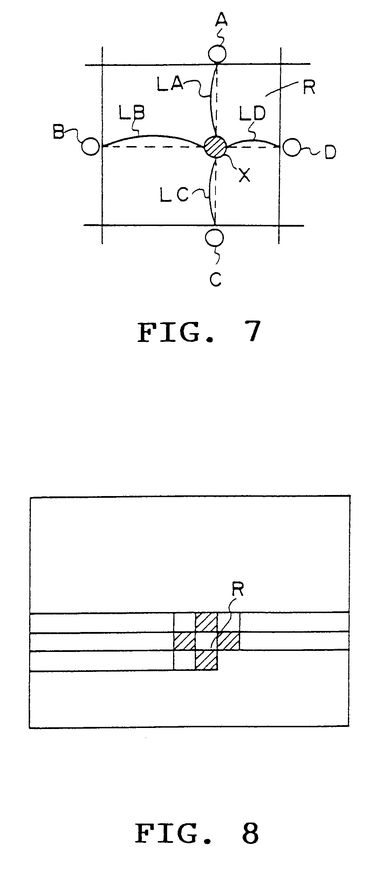

An interpolation circuit 40 receives motion vector S41 through a delay circuit 41 from the motion vector memory 32, and also receives the switching signal S23 through a delay circuit 42. When the motion quantity of the motion vector data S41 is larger than a predetermined threshold, the interpolation circuit 40 produces the interpolation picture data S43 based on picture data S42 for four pixels (pixels white dots A, B, C and D of the adjacent blocks in a case that a lacked pixel is a block dot X in Fig. 7) read from the frame memory 29.

For the intra-frame interpolating processing, in Fig. 7, the interpolation circuit 40 requires the picture data (a, b, c and d) for the four pixels A, B, C and D which are located in upper, lower, left and right blocks with respect to a remarked block R. Therefore, the interpolation of the pixel data is carried out after the completion of the decoding of the block adjacently located under the remarked block R.

If the remarked block R is located at the lowermost row in a screen, the interpolation circuit 40 starts the intra-frame interpolating processing, immediately after the inter-frame interpolating processing by the motion compensating circuit 34.

The delay circuits 41 and 42 delay the motion vector data S41 and the switching signal S23 to enable correction of the block preceding, by one row (one slice), the block which is already subjected to the current decoding by the interpolation circuit 40 or the inter-frame correction.

In the construction described above, the motion picture data decoder 20 sequentially reads the reproduction data S21 from the record medium and supplies the same through the buffer circuit 22 to the code error detecting/correcting circuit 23.

If the code error detecting/correcting circuit 23 can correct the code error in the reproduction data S21, the motion picture data decoder 20 supplies the corrected picture data S22, which is corrected based on the error detecting/correcting code, through the demultiplexer circuit 24, variable length decoding circuit 25, inverse quantizer 26 and discrete cosine inverse transform circuit 27 in this order to the frame data generating circuit 28.

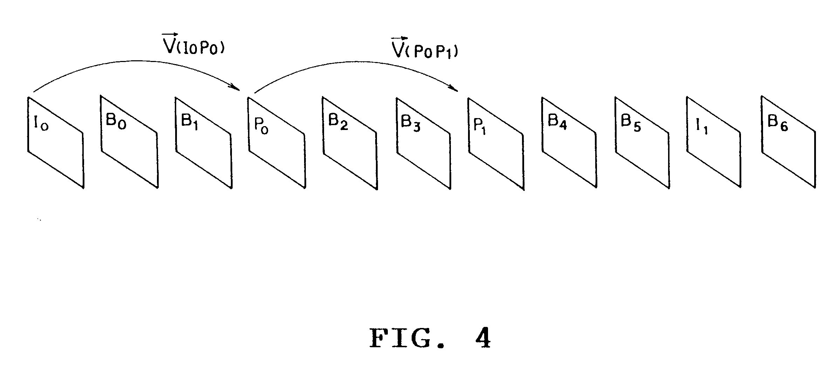

The frame data producing circuit 28 produces the decoded picture data S29 by adding the decoded data S27 to the motion compensation data S28, which is formed by applying the motion compensation to an intra-frame I₀ stored in the frame memory 29 as the reference frame, and supplies it through the switching circuit 30 to the frame memory 29, in which the picture data of the predict frame P₀ and bidirectional frames B₀, B₁, ... is sequentially decoded and supplied as the decoded picture data S34 (Fig. 4).

When the code error detecting/correcting circuit 23 detects the block including the uncorrectable code error of the reproduction data S21, the motion picture data decoder 20 supplies the switching signal S23 to the switching circuit 30 and 31, and interrupts the writing of the decoded picture data S29 and the current motion vector S30 in the frame memory 29 and the motion memory 32.

The motion picture data decoder 20 supplies the switching signal S23 to the vector memory 32 and the switching circuit 33, and reads the motion vector in the corresponding block of the past frame stored in the motion vector memory 32. The motion vector thus read is supplied to a compensation circuit 34, and the corresponding pixels are replaced with the predictive picture data S33 which is predicted from the past motion vector.

In the motion picture data decoder 20, when the uncorrectable code error in the intra-frame I₁ is detected, as shown in Fig. 4, the motion vector $\vec{\text{V}}$ (P₀P₁), at least, between the first and second predictive frames P₀ and P₁ stored in the motion vector memory 32 is used to produce the predictive picture data S33 of the intra-frame I₁ from the second predictive frame P₁ by the inter-frame prediction.

The frame memory 29 replaces the block, in which the lack is generated due to the uncorrectable code error, with the predictive picture data S33 produced by the motion compensation circuit 34, and supplies it as the decoded picture data S34.

This effectively avoids deterioration of the picture quantity in the frame, of which code error which may be propagated to other frames in the prior art when the code error is generated in the intra-frame I.

Similarly, in the motion picture data decoder 20, when the uncorrectable code error is detected in the second predictive frames P₁, the replacement is executed by using the motion vector $\vec{\text{V}}$ (I₀P₀) between the intra-frame I₀ and first predictive frame P₀ and carrying out the inter-frame prediction of the predictive picture data S33 of the second predictive frame P₁ from the intra-frame I₀.

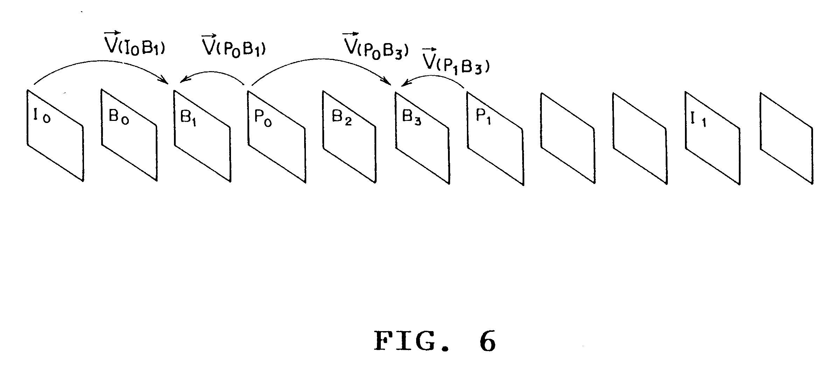

Further, in the motion picture data decoder 20, when the uncorrectable code error is detected in the fourth bidirectional frame B₃ predicted from both the first and second predictive frames P₀ and P₁, the motion vector $\vec{\text{V}}$ (I₀B₁) between the intra-frame I₀ and second bidirectional frame B₀ as well as the motion vector $\vec{\text{V}}$ (I₀B₁) between the first predictive frame P₀ and second bidirectional frame B₁ are used to predict the fourth bidirectional frame B₃ from both the first and second predictive frames P₀ and P₁ for replacement (Fig. 6).

On the other hand, when the quantity of motion of the motion vector is large, it is possible adds processing as following: i.e., the interpolation circuit 40 determines whether the motion quantity of motion vector data S41 supplied through the delay circuit 41 is larger than the predetermined value or not. If the motion quantity is smaller than the predetermined value, the frame memory 29 supplies the frame picture, as the output picture data S34, which is subjected to the inter-frame interpolation by replacing the pixel data x of the lacked pixel X with the predictive picture data S33.

On the other hand, when the motion quantity is larger than the predetermined value, the interpolation circuit 40 produces the picture data of the remarked pixel X from the four pixels (A, B, C and D) of the blocks adjacent to the remarked block R, in which the pixel X containing the uncorrectable code error is generated, and supplies it as the interpolated picture data S43.

As shown in Fig. 7, the four pixels white dots A, B, C and D in the adjacent blocks are the pixels, which are located in the same column or row as the remarked pixel black dot X and are adjacent to the remarked block R, and have pixel values of a, b, c and d, respectively.

Assuming that distances between the four pixels A, B, C and D and the remarked pixel X are LA, LB, LC and LD, respectively, the pixel value x of the remarked pixel X can be obtained by the linear interpolation expressed by the following formula, generally:$\text{x =} \frac{\text{LA×c+LC×a}}{\text{2 (LA+LC)}} \text{+} \frac{\text{LB×d+LD×b}}{\text{2 (LB+LD)}}$ The pixel value x is supplied as the interpolated picture data S43 to the frame memory 29.

In the above case, the frame memory 29 newly rewrites the pixel value x of the remarked pixel X containing the uncorrectable code error into the interpolated picture data S43, which is produced by the intra-frame interpolation of the temporally stored predictive picture data S33, instead of the data S33, and supplies it as the output picture data S34.

In such cases that the remarked block R containing the remarked pixel X including the uncorrectable code error is the outermost block in the screen, or that one of the adjacent blocks includes the uncorrectable code error, the four pixels A, B, C and D in the adjacent blocks cannot be referred to, so that the pixel value x is obtained, using the pixel of the adjacent block opposite to the undetectable adjacent block.

For example, in Fig. 7, if the left adjacent block cannot be referred to, and thus the pixel value b of the pixel B cannot be obtained,$\text{b = d}$ is substituted for the formula (1) to obtain the pixel value x of the remarked pixel x.

In the case that it is impossible to refer to the adjacent blocks, which are located at the left and right sides of the remarked block R containing the remarked pixel X including the uncorrectable code error, that uses by the pixel value a and c in pixels A and C which are located at the upper and lower sides,$\text{x =} \frac{\text{LA×c+LC×a}}{\text{LA+LC}}$ is used to obtain the pixel value x, by which correction is carried out to render the picture containing the lacked pixel unnoticeable with respect to the peripheral portion. These positional relation of blocks R and A to D is shown in Fig. 8.

According to the above construction, the motion picture data decoder operates as follows for reproducing the motion picture data by decoding the same in units of blocks. When the uncorrectable code error is detected in the motion picture data to be reproduced, the picture of the corresponding block is temporally replaced with the predictive picture, which is produced from the past frame based on the motion vector in the past frame. Further, if the motion quantity of the motion vector used for the prediction is large, the picture is replaced with the interpolated picture which is interpolated from the peripheral pixel. Thereby, the lacked picture can be corrected to render the lack caused by the code error unnoticeable, regardless of the motion quantity of the lacked picture.

In the embodiment described hereinabove, the picture is predicted in units of frames. However, the invention is not limited to the above case, and may be applied to a system in which the picture is motion predicted in units of fields.

Further, in the embodiment described hereinabove, the invention is applied to the system utilizing the discrete cosine transform DCT and the motion prediction between the frames. However, the invention is not limited to the above case, and may be suitably applied to a motion picture data decoder executing the prediction processing between the frames.

Further, in the embodiment described hereinabove, the inter-frame interpolation of the picture data including the uncorrectable code error is carried out, utilizing the picture data which is subjected to the motion compensation by the past motion vector corresponding to the picture data including the uncorrectable code error. However, the invention is not limited to this, and may be applied to the case in which the replacement is carried out, using the pixel data in the corresponding block of the past frame.

Further, in the embodiment described hereinabove, when the uncorrectable code error generates, the intra-frame or inter-frame interpolation is carried out, using the motion vector of the past frame. However, the invention is not limited to the above case, and the interpolating processing may be carried out, using the motion vector of the adjacent block in the same frame.

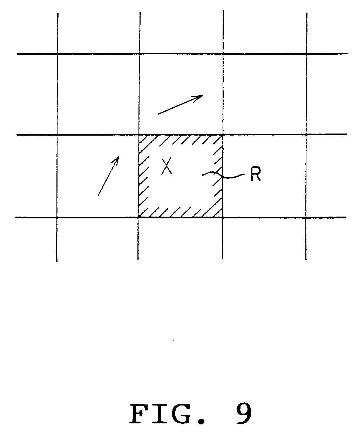

For example, as shown in Fig. 9, the motion vector of the block which has been decoded and is adjacently located at the left or upper side with respect to the remarked block R.

Further, in the embodiment described hereinabove, if it is impossible to refer to the block adjacently located at the left and right sides of the remarked block R containing the remarked pixel X containing the uncorrectable code error, the pixel value x of the remarked pixel X is obtained, using the formula (3). However, the invention is not limited to this case. If it is impossible to refer to the blocks adjacently located at the upper and lower sides of the remarked block R, the pixel value x of the remarked pixel X can be obtained in a similar manner.

Further, in the embodiment described hereinabove utilizes the sequence shown in Fig. 2, i.e., sequence of I₀, B₀, B₁, P₀, B₂, B₀, P₁, B₄, B₅, I₁, .... However, the invention is not limit to this, and may be applied to the cases of sequence determined by various combinations of the intra-frame I, predict frame P and bidirectional frame B.

Further, in the embodiment described hereinabove, the motion vectors for the last three frames are stored in the motion vector 32. However, the invention is not limited to this, and may be applied to various cases in which the motion vectors of the past multiple frames are stored.

Furthermore, the embodiment has been described with respect to the case in which the code error is generated in the single frame. However, the invention may also be applied to the case in which the code errors are continuously generated

For example, if the uncorrectable code errors are generated in the predict frame P₁ and intra-frame I₁, the motion vector $\vec{\text{V}}$ (I₀P₀) between the intra-frame I₀ and predict frame P₀ can be used.

While there has been described in connection with the preferred embodiments of the invention, it will be obvious to those skilled in the art that various changes and modifications may be made therein without departing from the invention, and it is aimed, therefore, to cover in the appended claims all such changes and modifications as fall within the true spirit and scope of the invention.

## Claims

1. A compressed motion picture signal expander for expanding a compressed motion picture signal to provide a motion picture output signal, the compressed motion picture signal comprising a sequence of signal portions, each signal portion representing part of a picture and including a motion vector, the apparatus comprising:
error correcting means for correcting errors in the compressed motion picture signal, and for supplying an error detection signal when an uncorrectable error is detected in a signal portion; and
decoding means for decoding said each signal portion of the compressed motion picture signal using a previously-decoded picture and the motion vector of the signal portion to provide a portion of the motion picture output signal, the decoding means providing one of a predictive picture signal and an interpolated picture signal as the portion of the motion picture output signal when the error detection signal indicates an uncorrectable error is detected in said signal portion.

2. The compressed motion picture signal expander according to claim 1, wherein the decoding means includes means for generating the predictive picture signal using the previously-decoded picture and a previous motion vector used by the decoding means to decode the previously-decoded picture.

3. The compressed motion picture signal expander according to claim 2, wherein the decoding means provides the interpolated picture signal as the portion of the motion picture output signal when the error detection signal indicates an uncorrectable error is detected in the signal portion and the previous motion vector represents a motion quantity greater than a predetermined value.

4. The compressed motion picture signal expander according to claim 1 or 2 wherein:
said each signal portion represents a block of a picture; and
the decoding means includes means for generating the interpolated picture signal by interpolation using decoded blocks adjacent the block represented by the signal portion wherein the error detection signal indicates an uncorrectable error is detected.

5. The compressed motion picture signal expander according to claim 1 or 2 additionally comprising means for reading the compressed motion picture signal from an optical disc.

6. The compressed motion picture signal expander according to claim 1, wherein:
said each signal portion represents a block of a picture; and
the decoding means provides the interpolated picture signal as the portion of the motion picture output signal when the error detection signal indicates an uncorrectable error is detected in the signal portion and an adjacent block motion vector represents a motion quantity greater than a predetermined value, the adjacent block motion vector being the motion vector of a signal portion representing a block adjacent the block represented by the signal portion wherein the error detection signal indicates an uncorrectable error is detected.
